# EUROPEAN PATENT SPECIFICATION

(11) **EP 2 503 523 B1**
(45) Date of publication and mention of the grant of the patent: **20.03.2013**
(21) Application number: 11159428.9
(22) Date of filing: 23.03.2011
(51) Int. Cl.: G08B 13/196, H04N 7/18

(54) **Dome window and surveillance camera device comprising such a dome window**
Kuppelfenster und Überwachungskameravorrichtung, die ein solches Kuppelfenster umfasst
Fenêtre en dôme et dispositif de surveillance par caméra comprenant ladite fenêtre

(43) Date of publication of application: 26.09.2012
(73) Proprietor: Axis AB, 223 69 Lund (SE)
(72) Inventor: Lundberg, Stefan, 224 56 Lund (SE); Svensson, Sven, 244 66 Furulund (SE)
(74) Representative: Åkesson, Sten Jan-Åke

(56) References cited:
- EP-A1- 2 026 564
- JP-A- 2010 107 772
- US-A1- 2005 259 985

## Description

### Field of the invention

The present invention relates to a dome window and more particular to a dome window for a camera surveillance device. The invention also relates to a surveillance camera device comprising such a dome window.

### Background art

Surveillance camera devices are generally used to monitor specific areas, such as banks, stores or public places. The camera device is often arranged for rotation and/or tilting in order to enable image acquisition from different positions in the specific area.

The surveillance camera device may comprise a hemispherical dome window, as for example is known from EP 202 6 564.

The dome window is normally manufactured by an injection moulding process in order to ensure uniform wall thickness.

For some applications, such as outdoor applications, it might be desirable to acquire an image from a position parallel with or above the horizon of the dome window. Since the lens arrangement of the surveillance camera device normally is arranged for tilting and rotation around pivot axes extending through or in the proximity of the centre point of the hemispherical part of the dome window, the dome window may therefore be provided with an additional transparent part adjoining said hemispherical part of the dome window in order to enable viewing in directions parallel with or above the horizon of the dome window.

The additional part may be cylindrical with requisite draft angles and the dome window may in this case be manufactured in one piece by injection moulding. However, the cylindrical part of the dome window affects the quality of the images acquired by the lens arrangement due to aberrations introduced by the dome window being partly non-spherically shaped.

Consequently, the additional part may be given the shape of a spherical segment in order to provide a dome window with a general spherical shape which not affect the image quality due to aberrations introduced by the dome window being partly non-spherically shaped.

Manufacturing of such a spherical dome window in one piece requires destroying of the mould subsequent to the moulding process which for obvious reasons is a costly way of production. Alternatively, a spherical dome window may be manufactured in two separate parts, for instance the hemispherical part as one section and the part with the shape of a spherical segment as one section. However such a two part dome window results in a joint along which the two sections of the dome window are joined. The joint will affect the quality of the acquired images.

It is thus evident that there is a need for an improved dome window for surveillance camera devices.

### Summary of the invention

In view of that stated above, the object of the present invention is to provide an improved dome window for a surveillance camera device.

A further object is to provide such an improved dome window in which the negative effect on image quality of a joint joining two sections of the dome window is eliminated or at least reduced.

It also an object to provide a surveillance camera device comprising such a improved dome window.

To achieve at least one of the above objects and also other objects that will be evident from the following description, a dome window for a surveillance camera device having the features defined in claim 1 and a surveillance camera device having the features defined in claim 13 are provided according to the present invention. Embodiments of the dome window will be evident from claims 2-12 and embodiments of the surveillance camera device will be evident from claims 14-15.

More specifically, there is provided according to the present invention a dome window for a surveillance camera device, comprising a first section and a second section, wherein said first section is joined to said second section along a joint in which a joint end of said first section is attached to a joint end of said second section. The dome window is characterised in that a light absorber is arranged in or on said joint.

Since the dome window comprises two sections, the dome window may be manufactured by injection moulding and still be given a general spherical shape. Due to the fact that a light absorber is arranged in or on the joint joining the first and second sections, negative effects on image quality due to light reflections in said joint is eliminated or at least significantly reduced. The joint will only appear as a thin dark line in the line of sight of the lens arrangement when viewing through corresponding parts of the dome window. For most zoom settings, such as zoomed-in situations, the joint in the form of a dark thin line may not be visible at all in the image, the joint only acting as a diaphragm slightly but negligible reducing the amount of incoming light.

The light absorber may according to one embodiment of the present invention comprise a covering with light absorbing properties applied on at least one of said joint ends of said first and second sections. By applying the light absorber in the form of a covering on at least one of said joint ends it is possible to minimize the width of the joint as perceived by the lens arrangement when viewing through a part of dome window comprising said joint. Alternatively or additionally, the covering may be applied on the inside or the outside of said dome window with an extension over said joint.

The covering with light absorbing properties may be selected from the group consisting of a tape, a double sided tape, a pigmented adhesive and a pigmented coating, ink or paint.

According to another embodiment, the joint ends may have corresponding cross section profiles. Hereby, it will be possible to minimize the joint size and also to provide a guide mutually aligning the first and second sections during the joining of the same.

The first section may have a hemispheric shape and the second section may have a shape of a spherical segment. Specifically, the first and second sections may form parts of a common sphere shape.

According to a further embodiment, the joint may be annular.

According to yet another embodiment, the first section may be a mirror image of the second section.

The wall thickness of the first and second sections may be in the range of 1 to 2 mm. By using a thin wall thickness, the joint width perceived by the lens arrangement may be minimized.

The first and second sections may be made of a plastic material such as PMMA or PC.

Furthermore, according to the present invention, a surveillance camera device is provided comprising a dome window as previously described. The benefits and effects of the inventive dome window stated above are in relevant parts also applicable to the inventive surveillance camera device.

According to one embodiment, the surveillance camera device may comprise a tilt- or rotatable lens arrangement with a front lens surface arranged at a constant distance D to a hemispherical part of said dome window. The distance D may be in the range of 1-20 mm and more preferably 4-10 mm. The effects by the joint on image quality may be minimized if the distance D is kept as small as possible.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief Description of the Drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig 1 is a perspective view of a surveillance camera device according to the present invention.
Fig 2 is a perspective view of an inventive dome window for the surveillance camera device shown in Fig 1.
Fig 3 is a perspective view of a second embodiment of an inventive dome window for a surveillance camera device.
Fig 4 is an exploded perspective view of the dome window shown in Fig 2.
Fig 5 is a partially sectioned side view of third embodiment of an inventive dome window for a surveillance camera device.
Figs 6a-c are part sectional views of an inventive dome window showing alternative embodiments of joint ends.
Fig 7 is a perspective view of a fourth embodiment of an inventive dome window for a surveillance camera device.

### Description of Embodiments

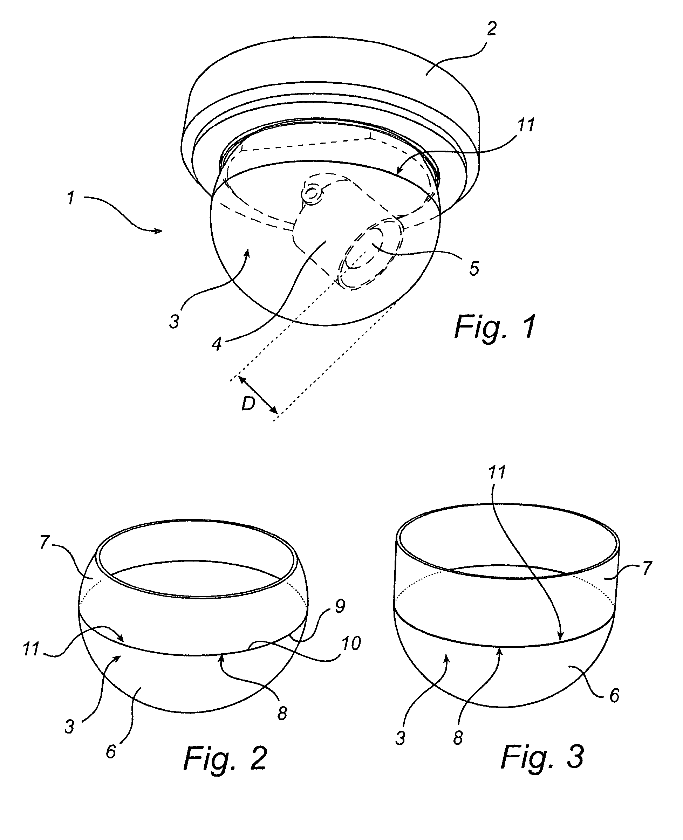

A surveillance camera device 1 in accordance with the present invention is disclosed in Fig 1.

The surveillance camera device 1 comprises a base 2 supporting a dome window 3 and a lens arrangement 4 (indicated with dashed lines) which is movable by tilting and/or rotation inside the dome window 3. Additional parts or components of the surveillance camera device 1 are not described as they are not needed in order to describe the invention.

A front lens surface 5 of the lens arrangement 4 is arranged at distance D from an inside surface of a hemispherical part of the dome window 3, which distance D is constant during tilting or rotation of the lens arrangement 4. The distance D may be in the range of 1-20 mm and more preferably 4-10 mm.

By the term "dome window" is meant a enclosure or cover arranged to partly enclose the lens arrangement of the surveillance camera device.

The dome window 3 is transparent at least when viewing in outward direction.

As a non limiting example, the dome window 3 may be made of a plastic material such as polymethylmethacrylate (PMMA) or polycarbonate (PC) and have a uniform wall thickness in the range of 1-2 mm.

The dome window 3 may be manufactured by injection moulding in order to ensure such uniform wall thickness.

The dome window 3 of the surveillance camera device 1 is shown in isolation in Fig 2, to which reference now also is made.

The dome window 3 comprises a first section 6 and a second section 7. In the shown embodiment, the first section 6 is hemispherical and the second section 7 has the shape of a spherical segment. The first and second sections 6, 7 thus form parts of a common sphere shape.

The first section 6 is joined to the second section 7 along a joint 8 in which a joint end 10 of the first section 6 is attached to a joint end 9 of the second section 7. The joint 8 has a horizontal or latitudinal orientation, and as the first section 6 is hemispherical and the second section 7 has the shape of a spherical segment, the joint ends 9, 10, and thus also the joint 8, are annular.

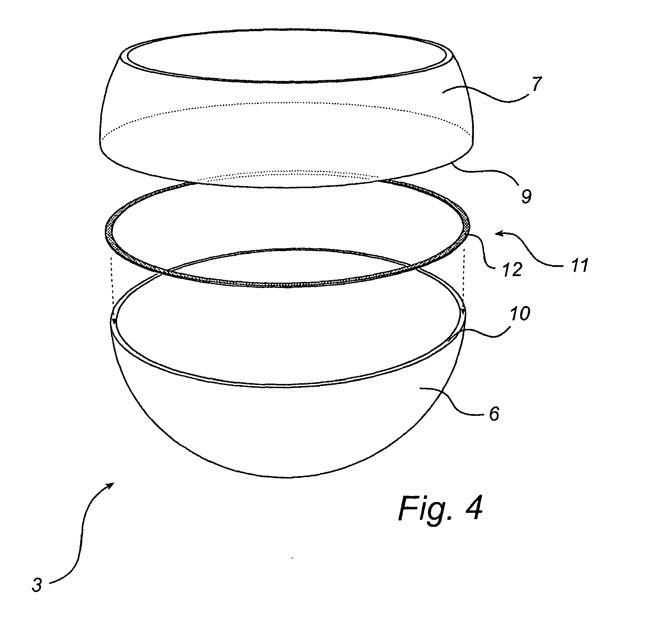

A light absorber 11 is arranged in the joint 8, which is shown more in detail in Fig 4 to which reference now also is made. The light absorber 11 may alternatively or additionally be arranged on the joint, which will be explained in detail below.

The light absorber 11 comprises a covering 12 with light absorbing properties and which is applied on at least one of the joint ends 9, 10 of the first and second sections 6, 7.

The purpose of the light absorber 11 is to eliminate or at least substantially reduce light reflections in said joint 8.

In the embodiment shown in Fig 4, the covering 12 is in form of a double sided tape. The tape may be matte black in order to render it light absorbing properties. The double sided tape is also used for the joining of the first and second sections 6, 7.

Alternatively, the covering 12 may be in the form of a pigmented adhesive. A pigment colouring the adhesive matte black may be used in order to render the adhesive light absorbing properties. An example of such a pigment is carbon black. The adhesive may also be used for the joining of the first and second sections.

According to a further alternative, the covering may be in the form of a pigmented coating, ink or paint. A pigment colouring the coating, ink or paint matte black may be used in order to render the coating, ink or paint light absorbing properties. An example of such a pigment is carbon black.

Thus, in accordance with the present invention, a dome window 3 for a surveillance camera device 1 is provided. The dome window 3 comprises a first section 6 and a second section 7, which sections 6 ,7 are joined along a joint 8, and a light absorber 11 is arranged in or on said joint 8.

The dome window 3 will consequently exhibit a joint 8. When in use, the joint 8 will be positioned in the line of sight of the lens arrangement 4 for certain orientations of the lens arrangement 4. However, the light absorber 11 arranged in or on said joint 8, will have the effect of the joint 8 only appearing as a thin dark line not reflecting any light, and for most zoom settings of the lens arrangement 4, the joint 8 will be more or less invisible in an image acquired by the lens arrangement 4.

The fact that the light absorber 11 eliminates or at least substantially reduces light reflections in the joint 8 will result in significantly enhanced image quality since these reflections otherwise would be clearly visible in the image.

In most zoom settings, such in zoomed-in situations, the joint 8, appearing as a thin dark line, will be practically invisible in the acquired image and will only act as a diaphragm slightly but negligible reducing the amount of incoming light to the lens arrangement 4. In fully zoomed-out situations, the joint 8 might be slightly visible in the image as a line shaped shadow.

In order to minimize the influence of the joint 8 on the image quality, the distance D between the front lens surface 5 of the lens arrangement 4 and the joint 8, i.e. the inside surface of the dome window 3, should be kept as small as possible. Practically, the distance D may be in the range of 1-20 mm and more preferable 4-10 mm. The distance D may, as mentioned above, be kept constant or nearly constant to the spherically shaped parts of the dome window 3 during tilting and/or rotation of the lens arrangement 4.

It is understood that the present invention is not limited to the above described embodiments.

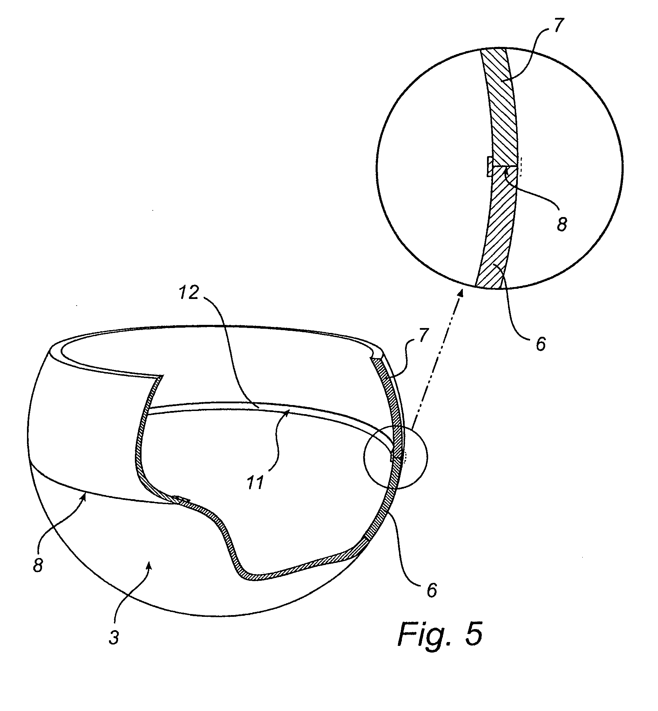

As mentioned above, the light absorber might alternatively or additionally be applied on the joint. Thus, in accordance with a third embodiment of the inventive dome window 3, a covering 12 in the form of a matte black tape may be applied on the inside of the dome window 3 with an extension over said joint 8, as shown in Fig 5. It is understood that the covering alternatively or additionally may be applied over the joint on the outside of said dome window (shown in dotted lines).

Further, the second section 7 of the dome window 3 may be given another shape than that of a spherical segment. In Fig 3, to which reference now is made, a second embodiment of the inventive dome window 3 is shown. In this embodiment, the second section 7 has been given a cylindrical shape. The image quality will be affected when a lens arrangement 4 is viewing outward through both the hemispherical first section 6 and the cylindrical section 7 of the dome window 3 due to optical effects, but negative influences due to light reflections in the joint have been eliminated or at least significantly reduced by means of the light absorber 11 arranged in said joint 8.

Additional shapes of the second section are also conceivable. For instance, the second section may be given the form of a truncated cone.

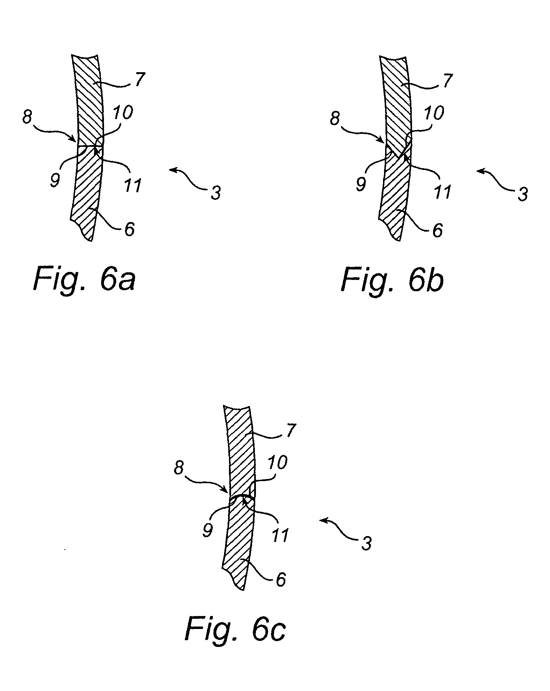

In the embodiments of the dome window shown in Figs 2 and 3, the joint ends of the first and second sections have corresponding cross-section profiles extending straight in radial direction, which is shown in Fig 6a depicting a cross sectional view of a part of the dome window 3 comprising said joint 8. It is understood that the cross-section profiles may be given other shapes. The corresponding cross-section profiles of the joint ends of the first and second sections may for instance extend obliquely or have a V- or U-shape, as shown in Figs 6b and 6c, respectively. By forming the joint ends with corresponding cross-section profiles, it will be possible to minimize the joint size and also to provide a guide mutually aligning the first and second sections during joining of the same

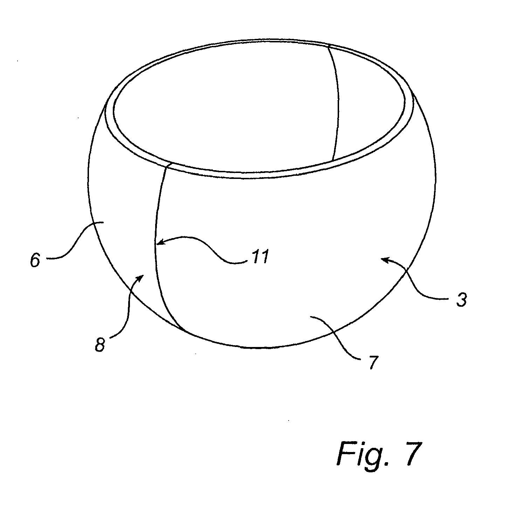

In the embodiments shown above, the joint has a horizontal or latitudinal orientation. It is understood that the joint and the light absorber arranged in or on said joint might have other orientations. In accordance with a fourth embodiment of the inventive dome window 3, such an other orientation may be a vertical or longitudinal orientation, which is shown in Fig 7. For a dome window with a shape corresponding to the ones shown in Figs 2 and 3, this would result in the first and second sections being mirror images of each other.

Consequently several modifications and variations are conceivable, which means that the present invention is exclusively defined by the appended claims.

## Claims

1. A dome window for a surveillance camera device (1), comprising a first section (6) and a second section (7),
wherein said first section (6) is joined to said second section (7) along a joint (8) in which a joint end (10) of said first section (6) is attached to a joint end (9) of said second section (7), **characterised in that**
a light absorber (11) is arranged in or on said joint (8).

2. A dome window according to claim 1, in which said light absorber (11) comprises a covering (12) with light absorbing properties applied on at least one of said joint ends (9, 10) of said first and second sections (6,7).

3. A dome window according to claim 1 or 2, in which said light absorber (11) comprises a covering (12) with light absorbing properties applied on the inside or the outside of said dome window and extending over said joint (8).

4. A dome window according to claims 2 or 3, in which said covering (12) with light absorbing properties is selected from the group consisting of a tape, a double sided tape, a pigmented adhesive and a pigmented coating, ink or paint.

5. A dome window according to any of the preceding claims, in which the joint ends (9 ,10) have corresponding cross section profiles.

6. A dome window according to any of the preceding claims, in which the first section (6) has a hemispheric shape.

7. A dome window according to any of the preceding claims, in which the second section (7) has a shape of a spherical segment.

8. A dome window according to claim 6 and 7, in which the first and second sections (6 ,7) form parts of a common sphere shape.

9. A dome window according to any of the preceding claims, in which the joint (8) is annular.

10. A dome window according to any of claims 1 to 5, in which the first section (6) is a mirror image of the second section (7).

11. A dome window according to any of the preceding claims, in which the wall thickness of the first and second sections (6, 7) is in the range of 1 to 2 mm.

12. A dome window according to any of the preceding claims, in which the first and second sections (6, 7) are made of a plastic material such as PMMA or PC.

13. A surveillance camera device comprising a dome window (3) according to any of the preceding claims.

14. A surveillance camera device according to claim 13, comprising a tilt- or rotatable lens arrangement (4) with a front lens surface (5) arranged at a constant distance (D) to a hemispherical part of said dome window (3).

15. A surveillance camera device according to claim 14, in which said distance (D) is in the range of 1-20 mm and more preferably 4-10 mm.

## Patentansprüche

1. Kuppelfenster für eine Überwachungskameravorrichtung (1), das einen ersten Abschnitt (6) und einen zweiten Abschnitt (7) aufweist,
wobei der erste Abschnitt (6) mit dem zweiten Abschnitt (7) entlang einer Verbindung (8) verbunden ist, in der ein Verbindungsende (10) des ersten Abschnitts (6) an einem Verbindungsende (9) des zweiten Abschnitts (7) befestigt ist, **dadurch gekennzeichnet, dass**
ein Lichtabsorber (11) in oder an der Verbindung (8) angeordnet ist.

2. Kuppelfenster nach Anspruch 1, in dem der Lichtabsorber (11) eine Abdeckung (12) mit Lichtabsorbtionseigenschaften aufweist, die auf mindestens einem der Verbindungsenden (9, 10) des ersten und zweiten Abschnitts (6, 7) aufgebracht ist.

3. Kuppelfenster nach Anspruch 1 oder 2, in dem der Lichtabsorber (11) eine Abdeckung (12) mit Lichtabsorbtionseigenschaften aufweist, die auf der Innenseite oder der Außenseite des Kuppelfensters aufgebracht ist und sich über die Verbindung (8) erstreckt.

4. Kuppelfenster nach Anspruch 2 oder 3, in dem die Abdeckung (12) mit Lichtabsorbtionseigenschaften aus der Gruppe ausgewählt ist, die aus einem Band, einem doppelseitigen Band, einem pigmentierten Haftmittel und einer pigmentierten Beschichtung, Tinte oder Farbe besteht.

5. Kuppelfenster nach einem der vorhergehenden Ansprüche, in dem die Verbindungsenden (9, 10) übereinstimmende Querschnittsprofile aufweisen.

6. Kuppelfenster nach einem der vorhergehenden Ansprüche, in dem der erste Abschnitt (6) eine halbkugelförmige Gestalt aufweist.

7. Kuppelfenster nach einem der vorhergehenden Ansprüche, in dem der zweite Abschnitt (7) die Gestalt eines Kugelsegments aufweist.

8. Kuppelfenster nach Anspruch 6 oder 7, in dem der erste und zweite Abschnitt (6, 7) Teile einer gemeinsamen Kugelgestalt ausbilden.

9. Kuppelfenster nach einem der vorhergehenden Ansprüche, in dem die Verbindung (8) ringförmig ist.

10. Kuppelfenster nach Anspruch 1 bis 5, in dem der erste Abschnitt (6) ein Spiegelbild des zweiten Abschnitts (7) ist.

11. Kuppelfenster nach einem der vorhergehenden Ansprüche, in dem die Wanddicke des ersten und des zweiten Abschnitts (6, 7) im Bereich von 1 bis 2 mm liegt.

12. Kuppelfenster nach einem der vorhergehenden Ansprüche, in dem der erste und des zweite Abschnitt (6, 7) aus einem Kunststoffmaterial, wie z.B. PMMA oder PC, hergestellt sind.

13. Überwachungskameravorrichtung, die ein Kuppelfenster (3) nach einem der vorhergehenden Ansprüche aufweist.

14. Überwachungskameravorrichtung nach Anspruch 13, die eine schwenk- oder drehbare Linsenanordnung (4) mit einer vorderen Linsenfläche (5) aufweist, die in einem konstanten Abstand (D) zu einem halbkugelförmigen Teil des Kuppelfensters (3) angeordnet ist.

15. Überwachungskameravorrichtung nach Anspruch 14, in welcher der Abstand (D) im Bereich von 1-20 mm und vorzugsweise 4-10 mm liegt.

## Revendications

1. Fenêtre en dôme pour un dispositif de surveillance par caméra (1), comprenant une première section (6) et une deuxième section (7),
dans laquelle ladite première section (6) est jointe à ladite deuxième section (7) le long d'une jointure (8) dans laquelle une extrémité de jointure (10) de ladite première section (6) est attachée à une extrémité de jointure (9) de ladite deuxième section (7), **caractérisée en ce que**
un absorbeur de lumière (11) est agencé dans ou sur ladite jointure (8).

2. Fenêtre en dôme selon la revendication 1, dans laquelle ledit absorbeur de lumière (11) comprend un revêtement (12) avec des propriétés d'absorption de lumière appliquées sur au moins l'une desdites extrémités de jointure (9, 10) desdites première et deuxième sections (6, 7).

3. Fenêtre en dôme selon la revendication 1 ou 2, dans laquelle ledit absorbeur de lumière (11) comprend un revêtement (12) avec des propriétés d'absorption de lumière appliquées sur l'intérieur ou l'extérieur de ladite fenêtre en dôme et s'étendant au-dessus de ladite jointure (8).

4. Fenêtre en dôme selon la revendication 2 ou 3, dans laquelle ledit revêtement (12) avec des propriétés d'absorption de lumière est sélectionné dans le groupe se composant d'un ruban adhésif, d'un ruban adhésif à double face, d'un adhésif pigmenté, et d'un enduit pigmenté, d'une encre pigmentée ou d'une peinture pigmentée.

5. Fenêtre en dôme selon l'une quelconque des revendications précédentes, dans laquelle les extrémités de jointure (9, 10) ont des profils de coupe transversale correspondants.

6. Fenêtre en dôme selon l'une quelconque des revendications précédentes, dans laquelle la première section (6) a une forme hémisphérique.

7. Fenêtre en dôme selon l'une quelconque des revendications précédentes, dans laquelle la deuxième section (7) a une forme de segment sphérique.

8. Fenêtre en dôme selon l'une quelconque des revendications 6 et 7, dans laquelle les première et deuxième sections (6, 7) constituent des parties d'une forme de sphère commune.

9. Fenêtre en dôme selon l'une quelconque des revendications précédentes, dans laquelle la jointure (8) est annulaire.

10. Fenêtre en dôme selon l'une quelconque des revendications 1 à 5, dans laquelle la première section (6) est une image en miroir de la deuxième section (7).

11. Fenêtre en dôme selon l'une quelconque des revendications précédentes, dans laquelle l'épaisseur de paroi des première et deuxième sections (6, 7) est dans la plage de 1 à 2 mm.

12. Fenêtre en dôme selon l'une quelconque des revendications précédentes, dans laquelle les première et deuxième sections (6, 7) sont constituées d'un matériau plastique comme du PMMA ou du PC.

13. Dispositif de surveillance par caméra comprenant une fenêtre en dôme (3) selon l'une quelconque des revendications précédentes.

14. Dispositif de surveillance par caméra selon la revendication 13, comprenant un agencement de lentille pouvant être incliné ou tourné (4) avec une surface de lentille avant (5) agencée à une distance constante (D) d'une partie hémisphérique de ladite fenêtre en dôme (3).

15. Dispositif de surveillance par caméra selon la revendication 14, dans lequel ladite distance (D) est dans la plage de 1 à 20 mm et avec plus de préférence de 4 à 10 mm.
